# EUROPEAN PATENT APPLICATION

(11) **EP 4 764 204 A1**
(43) Date of publication of application: **24.06.2026**
(21) Application number: 24222025.9
(22) Date of filing: 20.12.2024
(51) Int. Cl.: F03D 7/02

(54) **EXCITING A VIBRATION OF A WIND TURBINE**

(71) Applicant: Siemens Gamesa Renewable Energy A/S, 7330 Brande (DK)
(72) Inventor: Simeonov, Orlin Borisov, 7100 Vejle (DK); Freire, Nuno Miguel Amaral, 3150-109 Condeixa (PT); Duboc, Bastien, 76100 Rouen (FR); Deglaire, Paul, 92110 Clichy La Garenne (FR); Enevoldsen, Peder Bay, 7100 Vejle (DK)
(74) Representative: SGRE-Association

(57) **Abstract**

It is provided a method of exciting a vibration (14, 27, 28) of a wind turbine (1) having a wind turbine generator (3) including a rotor, in particular during an operation mode different from a power production mode, the method comprising, in particular in a repeated manner: monitoring an actual characteristic (17), in particular including magnitude and/or phase and/or frequency, of the vibration (14, 27, 28); determining a torque reference (21, Tref) based at least on a desired characteristic (29) of the vibration, the torque reference being suitable for exciting the vibration; generating a torque by the generator (3) according to the torque reference (21, Tref) for exciting the vibration (14, 27, 28).

## Description

### Field of invention

The present invention relates to a method and to a corresponding arrangement of exciting a vibration of a wind turbine having a wind turbine generator including a rotor. Furthermore the present invention relates to a wind turbine including the arrangement.

### Art Background

Wind turbine aero-elastic instabilities, in particular stall-induced and vortex-induced vibrations of a turbine, may represent an important contributor for fatigue damage in particular of very large wind turbine blades and towers which are deployed offshore. Those vibrations may exceed allowable levels when the wind turbine does not produce power, for instance during idling or blade installations or when the wind turbine is stopped with a partially or fully installed rotor. For example, vibrations of different edgewise rotor modes (first order or second order edgewise asymmetric tilt/yaw and symmetric modes) have been observed.

The document EP 3 887 673 B1 addresses the build-up of vortex-induced vibrations and proposes a pitch and yaw control for exciting. However, during service operations (maintenance etc.), commissioning operations or failure modes (for example communication loss, etc.) neither yaw nor pitch control may be possible or allowed.

There may be a need for a method and a corresponding arrangement of exciting a vibration of a wind turbine by which critical inflow conditions (including wind speed, yaw misalignment, shear, etc.) can be observed and in particular the vibrational characteristics of one or more components of the wind turbine can be examined or evaluated. By the characterization of the vibrational behavior of one or more wind turbine components, respective counter measures, in particular control features, may be derived and implemented.

### Summary of the Invention

This need may be met by the subject matter according to the independent claims. Advantageous embodiments of the present invention are described by the dependent claims.

The development of mitigation solutions to reduce the structural loads due to vibrations in idling and standstill requires that the underlying physical phenomena are studied and better understood. Furthermore, estimating better the structural damping of the turbine components (tower, foundation, blades) is essential to assess the vibration risk. To achieve those goals, measurements on vibrating turbines need to be acquired and processed.

Embodiments of the present invention provide a control feature intended to trigger turbine vibrations in a controlled and fast manner of different structural modes (edgewise rotor modes and tower modes), with the objective of mimicking aero-elastic instabilities that would be caused by the wind. The turbine response to vibrations may be measured during steady-state vibrations while the present method is active, or during a free decay after the method is switched off.

According to embodiments of the present invention, this minimizing of loads is implemented through having a more precise mapping of the critical inflow conditions that trigger vibrations, through a specific exciter procedure to be run on both turbine prototype tests and turbines in specific wind farms. The methodology may be applied in standstill or idling or conditions. The method may be applied to a direct drive wind turbine or to a wind turbine having a gearbox (between a hub and a main shaft of a generator).

Embodiments of the present invention provide a method that excite turbine modes by means of an exciting torque generated by the electrical drive train. Embodiments may require to monitor vibrations, generating a torque demand and controlling a generator, for example a permanent magnet generator to deliver the demanded torque.

The methodology may be applied in the context of optimizing the time needed to characterize all risky conditions the wind turbine can experience - that will be an optimization procedure integrating specific environmental conditions and simulations inputs.

According to an embodiment of the present invention a method may excite wind turbine modes under aeroelastic instabilities by means of an excitation torque generated by the electrical drive train, thus its architecture may resemble other active damping features deployed for turbine, such active drive train damping (ADTD) and active tower damping (ATD), but reversed (excitation instead of damping). The testing procedure may be optimized by reducing the testing time, by using a priori computations and heatmaps of risky conditions obtained through specific aeroelastic simulations including CFD.

In order to study the behavior of the wind turbine under aero-elastic instabilities leading to idling/standstill vibrations, the present method may be used to generate vibrations, in a fast and controlled manner (i.e. without damaging the structure), of a chosen structural mode. This may be achieved by applying a torque on the rotor shaft with the generator, modulated at the frequency of the chosen mode.

The excitation torque may then switched off, and the output of some turbine sensors (accelerometers, blade load sensors) may be studied to characterize the turbine response during the free decay that follows the excitation.

This excitation method may be used in a larger procedure, intended to:
1) be run in some selected onshore and offshore wind farms to assess the structural damping when there is "no wind" (wind speed is as low as possible), and compare to the initial estimate provided by the customers; and
2) be run in some selected onshore and offshore wind farms for various inflow conditions (wind speeds and direction, shear, turbulent intensity, etc.) and rotor azimuth angles to trigger different turbine vibrations modes (such as rotor modes, 1^{st} and 2^{nd} order tower modes), to build a generic database providing the instability risk with respect to those parameters.

The purpose of the point 1) may be to reduce the uncertainty on the value of the structural background damping of the turbine modes, which is a key parameter for the prediction of the turbine aero-elastic stability. In particular, the damping of the tower modes is a good indicator of the tower and foundation background damping values, that are usually parameters provided by the customers. If the customers provide too optimistic estimates, the actual values measured using the present method can be used to challenge their inputs. If it is established that turbine vibrations occurred because the tower dampers have been undersized due to too low damping values provided by the customer, it can justify the sale of additional mitigation solutions to address the vibration issue.

The purpose of the point 2) may be to increase the overall knowledge on aero-elastic instabilities in idling/standstill, support the validation of numerical simulation processes and support the development of mitigation solutions to prevent the vibrations to happen.

According to an embodiment of the present invention, it is provided a method of exciting a vibration of a wind turbine having a wind turbine generator including a rotor, in particular during an operation mode different from a power production mode, the method comprising, in particular in a repeated manner: monitoring an actual characteristic, in particular including magnitude and/or phase and/or frequency, of the vibration; determining a torque reference based at least on a desired characteristic of the vibration, the torque reference being suitable for exciting the vibration; generating a torque by the generator according to the torque reference for exciting the vibration.

The method may be implemented in software and/or hardware or may be performed for example by a wind turbine controller. The vibration may be any vibrational mode of one or more wind turbine components as will be explained in more detail below.

The vibration may be any vibrational mode of a wind turbine. The vibration of the rotor blades may in particular be in the edgewise direction, i.e., a vibration (back and forth movement, or reciprocating movement) in the chord plane of the rotor blade.

The vibration of the turbine may be a superposition of one or more vibrational modes along different directions including edgewise vibration modes and/or flapwise vibration modes. Plural different vibration modes may be excited by the method by superposition of individual torque references which are each designed or derived to excite a particular vibration mode. The superimposed torque reference (for example a sum signal of individual torque references) may then be supplied to the generator for generating a corresponding summed torque for exciting the plural different vibration modes, for example.

The generator may comprise a permanent magnet synchronous generator. During performing the method, the generator may not produce electrical energy, e.g. may be idling. The rotor may substantially stand still or may rotate only with a very slow rotational speed, such as below 0.01 rpm.

The rotor plane, out of which the edgewise vibration occurs, may be a plane perpendicular to a rotation axis of a rotor or hub of the generator.

Monitoring the characteristic may include to measure the characteristic using one or more sensors installed at the rotor blade and/or at the drive train and/or a nacelle, for example. At least a signal indicating the magnitude or amplitude of the vibration may be utilized as the characteristic of the vibration. For example, to a measurement signal for example of a strain gauge sensor, particular frequency filter(s) (e.g. BPF, LPF) may be applied to obtain information of an amplitude of a vibration of a particular considered frequency.

The torque reference may be, beside based on the actual characteristic of the vibration, also additionally be based on a desired characteristic of the vibration, i.e. a demanded characteristic to be excited. Also this desired characteristic may be specified by particular frequency and/or amplitude.

The torque reference may represent a torque to be generated by the generator in order to excite the vibration. The torque reference may for example also be represented as a current reference being in essence equivalent to the torque reference. Thus, also (alternatively or additionally) a current reference may be determined based on the characteristic of the vibration.

The generator may then be controlled in order to generate the torque according to the torque reference. Thereby, the generator may in particular be connected to a generator-side converter, as will be explained below. Thereby, vibrations of the rotor blade may effectively be excited, i.e., enhanced in its amplitude.

According to an embodiment of the present invention the method further comprises evaluating the actual characteristic to identify critical inflow conditions. The present excitation method may be activated to generate vibrations of a specific turbine mode to a pre-defined level, and then switched off before assessing the turbine behavior during a free decay, by monitoring characteristic signals (acceleration, load level) and computing damping levels from those signals. This procedure may be repeated for all the relevant modes expected to be triggered by aero-elastic instabilities, and for a large range of inflow conditions (including at least several wind speeds and yaw misalignment values).

The frequency analysis may include to perform a Fourier transform in order to detect or determine frequency components of the excited vibration. Evaluating the actual characteristic may later on help to develop for example mitigation features in order to damp or avoid one or more vibrations of one or more wind turbine components.

According to an embodiment of the present invention, the generator is electrically connected to a generator-side converter, in particular AC/DC converter, including plural controllable switches, for controlling the generator, the method comprising: deriving an operational parameter reference, in particular voltage and/or current reference, which is based on the torque reference; receiving, by the generator-side converter, the operational parameter reference, in particular voltage reference; operating, by the generator-side converter, the controllable switches based on the operational parameter reference.

The generator-side converter may comprise plural controllable switches, for example power transistors, which may be controlled by supplying respective gate signals for controlled opening and closing of the controllable switches. Thereby, the generator-side converter may be capable of converting a variable frequency AC power stream to a substantially direct current (DC) power stream and vice versa. It is noted that for generating an oscillating torque the generator-side converter is required to work in both generating and motoring modes.

The generator-side converter may be connected to the generator to receive the AC power stream during power production mode. During the exciting method, the generator may be operated in a motor mode in order to generate the torque according to the torque reference. For controlling the generator in this embodiment, the generator is controlled via the generator-side converter.

In the case that the generator-side converter has previously been stopped, the generator-side converter may be started. The operational parameter reference may be derived using one or more control curves or reference curves which define relationships between the torque reference and the respective operational parameter reference. The operational parameter reference may for example be derived by a control module receiving for example an error between the current reference and an actual current indicating feedback. Such control module may include a proportional term and/or an integral term and/or an differential term. The particular control module may be especially adapted for the frequency of the rotor blade vibration to be excited.

When plural vibration modes are to be excited, a controller may include for each vibration mode a respective especially adapted control module which may then derive an individual operational parameter reference which is suitable for controlling the particular individual vibration mode. The individual operational parameter references may then be combined, in particular summed, in order to derive a combined operational parameter reference that may then be supplied to the generator-side converter in order to excite plural individual vibration modes of the rotor blade. Furthermore, for example, a gate driver module may be employed for converting the operational parameter reference to individual switch signals of the plural controllable switches. Thereby, an effective control may be achieved using conventionally available components.

According to an embodiment of the present invention, the method further comprises in particular as an inner loop: monitoring actual currents of generator windings of the generator; determining a current reference, in particular in a d-q frame, based on the torque reference and in particular a rotor position; supplying the monitored actual currents, in particular converted to the d-q frame, and the current reference to a current controller, in particular in including a proportional and/or integral and/or differential term; deriving, by the current controller, an operational parameter reference, in particular in an abc-frame, in particular voltage reference; supplying the operational parameter reference to the generator-side converter.

The torque reference may be generated in open-loop and converted to a current reference, then current may be controlled in closed-loop.

The actual currents may be obtained by respective measurement sensors (at stator windings) and may result in actual currents in the fixed abc-frame. The current reference may in particular be derived or determined in the d-q-frame being a coordinate frame rotating synchronously with the rotor. Therefore, transformations between the abc-frame and the d-q-frame may be required which require the knowledge of the rotor position. The rotor position may be measured or estimated depending on the application. The rotor position may in particular be determined without using a sensor by applying high frequency injection and deriving the rotor position from the electrical quantities, such as current and/or voltage of the generator windings. The current controller may derive the operational parameter reference such that the difference between the current reference and the monitored actual current diminishes and ideally becomes zero. Thereby, an effective exciting torque may be achieved.

The control method may include an outer loop and an inner loop. The outer loop may involve to receive a feedback regarding the (wind turbine component, e.g. rotor blade) vibration. The inner loop may be integrated into the outer loop and may involve to receive a torque indicating feedback, for example including a current feedback (from which the actual torque may be derivable). The rotor position may be derived sensorless by a high frequency injection method as is known in the art. The high frequency injection method or the sensorless rotor position determination may in particular be advantageous during very low rotation speed or even stand still.

According to an embodiment of the present invention, the method further comprising at least one of: receiving, by a monitoring module, the actual characteristic of the vibration, in particular a magnitude of the vibration in a predetermined frequency range; switching off generating the exciting torque; recording the actual characteristic of the vibration (14), in particular a magnitude of the vibration in a predetermined frequency range over a time range after switching off the exciting torque; analysing the actual characteristic of the vibration, in particular a magnitude of the vibration in a predetermined frequency range over a time range; determining decay characteristic of the vibration after switching off an exciting torque; switching off the exciting torque, if a magnitude of the vibration is greater than a threshold for protecting at least one wind turbine component.

According to an embodiment of the present invention, the actual characteristic of the vibration is monitored using measurement data from at least one blade strain gauge sensor and/or load sensor and/or accelerometer installed at the blade and/or at the generator and/or drive train and/or at a nacelle.

Thereby, conventionally available sensor components of conventional wind turbines may be deployed or employed thereby simplifying the complexity of the method.

According to an embodiment of the present invention, the operation mode includes that the rotor is idling and/or locked and/or a brake is applied to the rotor and/or that a rotational speed of the rotor is less than a number in the range between 0.01 and 0.1 rpm.

The rotor may be idling in the sense that the wind turbine is yawed and pitched such that the impacting wind substantially does not cause rotation of the rotor. The rotor may for example be locked by inserting locking pins in locking pin openings provided at the rotor and a stator portion of the wind turbine. Although locked, slight rotor movement may be possible due to slight clearances between locking pins and locking holes. Thus, still it may be possible to exert a torque to the rotor by operating the generator in the motor mode for exciting the vibration(s). Further, even if the brake is applied for braking the rotor, slight movement of the rotor may still be possible since the brake not necessarily completely fixes the rotor relative to a stator portion. Thus, the method may be applicable or applied in different operation modes or conditions or states which do not include a power production mode.

According to an embodiment of the present invention, the vibration including at least one of: an aeroelastic vibration of one or more components of the wind turbine; a vortex-induced vibration (VIV) of a wind turbine blade being coupled to a rotor of the generator; a stall-induced vibration (SIV) of a wind turbine blade being coupled to a rotor of the generator; a vibration of at least portion of a drive train of the wind turbine; a vibration of at least a portion of a rotor blade of the wind turbine; an edgewise vibration (14) of at least a portion of a rotor blade, in particular out of or orthogonal to a rotor plane (15), a flapwise vibration (14) of at least a portion of a rotor blade, in particular within or parallel to a rotor plane (15), a vibration of at least portion of a rotor of the wind turbine, a vibration of at least a portion of the tower of the wind turbine in the fore-aft or the side-to-side direction.

According to an embodiment of the present invention, the generator-side converter is connected to a DC-link which is connected to a grid-side converter, the method comprising: stopping or keeping the grid side converter turned off.

The grid-side converter may be turned off during the entire exciting method. In other embodiments, the grid-side converter may be turned on in order for example to receive electrical energy from a utility grid for performing for example the control method or keep other essential components be running.

According to an embodiment of the present invention, the blade is pitched to substantially 90° or a feather position or a stop position or an idling position; the desired characteristics of the vibration resembles that of a vortex induced vibration; the desired characteristics of the vibration (14) includes one or more edgewise rotor vibration modes, in particular having frequency between 0.1 Hz and 5 Hz.

Vortex-induced vibration (VIV) is a type of aeroelastic instability where a structure experiences vibrations because it is excited by the surrounding fluid, that generates a force on this structure. VIV occurs when under certain conditions, the oscillating forcing due to vortex shedding from the fluid has the same frequency as the eigen-frequency of the structure.

According to an embodiment of the present invention, the generator is or comprises a permanent magnet synchronous generator, in particular having an outer rotor. The outer rotor may be coupled to a hub at which one or more rotor blades may be mountable or may be mounted.

It should be understood, that features, individually or in any combination, disclosed, described, explained or provided for a method of exciting a vibration of a wind turbine (component) may also be applied or provided, individually or in any combination, to an arrangement for exciting a vibration of a rotor blade of a wind turbine, according to embodiments of the present invention and vice versa.

According to an embodiment of the present invention, it is provided an arrangement for exciting a vibration of a wind turbine having a generator including a rotor, in particular during an operation mode different from a power production mode, the arrangement comprising: an input port for receiving a signal indicating an actual characteristic, in particular including magnitude and/or phase and/or frequency, of the vibration; a processor adapted to determine a torque reference at least based on the characteristic of the vibration and in particular a desired characteristic of the vibration, the torque reference being suitable for exciting the vibration; an output port for controlling the generator based on the torque reference.

The arrangement may be implemented in software and/or hardware and may for example be a portion of a wind turbine controller.

According to an embodiment of the present invention, the arrangement is adapted to carry out or control a method of exciting a vibration according to one of the above-described embodiments.

According to an embodiment it is provided a wind turbine, including: an arrangement according to any one of the embodiments described above; a generator for generating a torque according to the torque reference; at least a generator-side converter electrically connected to the generator, the arrangement being connected to control the generator-side converter; at least one rotor blade coupled to the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention including an arrangement according to an embodiment of the present invention;
Figs. 2A, B, C illustrate graphs showing physical quantities during performing methods according to embodiments of the present invention;
Figs. 3A, B, C illustrate results of Fourier transformations of the data shown in Figs. 3A, B, C.

### Detailed Description

The illustration in the drawings is in schematic form.

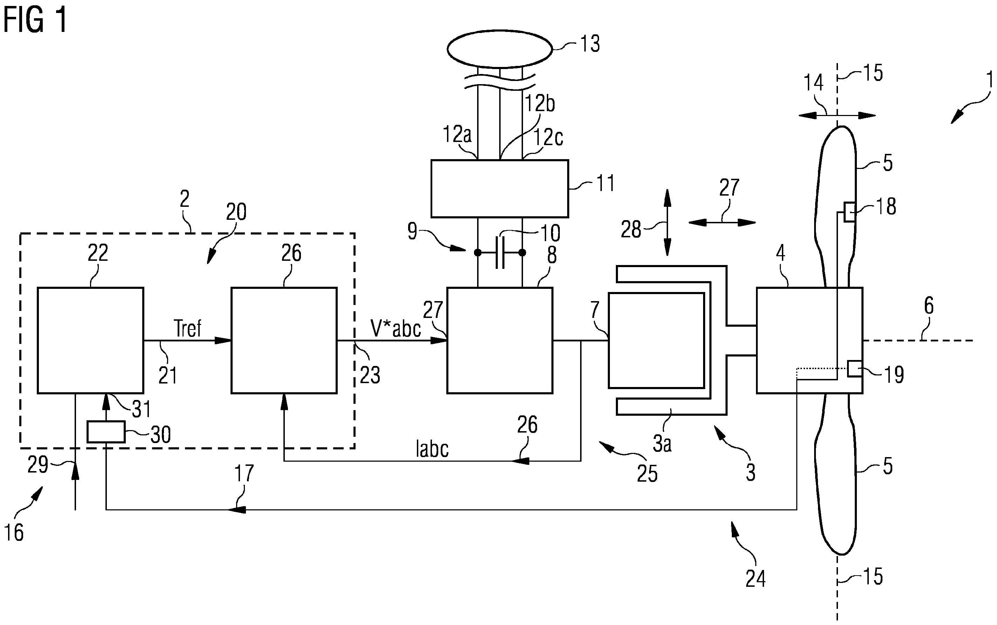

The wind turbine 1 schematically illustrated in Fig. 1 according to an embodiment of the present invention includes an arrangement 2 for exciting a vibration of one or more component of the wind turbine 1 according to an embodiment of the present invention which will be explained in more detail below.

The wind turbine 1 further comprises a generator 3 having rotor 3a which is coupled to a hub 4 at which plural rotor blades 5 may be mountable or mounted. During a power production mode, the generator 3 produces electrical energy upon rotation of the hub 4 about a rotation axis 6. The generator 3 comprises rotor 3a, in particular permanent magnet rotor, which is coupled to the hub 4. Furthermore, the generator 3 comprises not in detail illustrated stator with stator windings, in particular multiple phase stator windings, which provide at an output terminal 7 for example three-phase AC power.

The wind turbine 1 further comprises a generator-side converter 8 which is electrically connected to the generator 3 in order to receive the three-phase AC power stream from the generator 3 during a power production mode when the hub 4 is rotating. At the hub 4, zero, one or more rotor blades 5 may be mounted or are mounted.

In the illustrated embodiment, the wind turbine 1 further comprises a DC link 9 which is coupled to output terminals of the generator-side converter which substantially outputs a DC voltage. The DC link comprises a capacitor 10.

The wind turbine 1 further comprises a grid-side converter 11, in particular configured as a DC/AC converter which provides at output terminals a substantially fixed frequency power stream the output terminals indicated with reference signs 12a,b,c. During normal operation or power production operation, the wind turbine 1 is connected to a utility grid 13 to which electrical energy is provided.

The arrangement 2 included in the wind turbine 1 is adapted to carry out or control a method of exciting a vibration of a rotor blade 5 of the wind turbine 1 according to an embodiment of the present invention, during an operation mode different from a power production mode.

Embodiments of the present invention enable or provide a test methodology which is able to accurately capture maps of risky conditions leading to full turbine mode vibrations.

Embodiments of the present invention provide statistics of vibrations which are generated due to the excitation method.

Embodiments of the present invention may allow to excite wind turbine modes under aeroelastic instabilities by means of an exciting torque generated by the electrical drive train.

The vibration which is excited may for example include one or more vibrations 27, 28 of at least a portion of a drive train including for example the generator and/or the hub 4 and/or blade(s) 5. The vibrations of the drive train (or one or more wind turbine components in general) may involve periodic or repetitive movements or reciprocating movements in different directions and for example parallel to the rotation axis 6 or perpendicular to the rotation axis or in a direction in between the directions 27, 28 indicated in Fig. 1.

Particular embodiments may also excite blade vibrations for example edgewise and/or flapwise vibrations of one or more rotor blades. For example, the vibration 14 of the rotor blade 5 (here illustrated pitched to 90° or feather position such that e.g. a leading edge points towards the wind) includes an edgewise vibration out of a rotor plane 15. The rotor plane 15 is perpendicular to the rotation axis 6. The vibration 14 of the rotor blade 5 includes a reciprocating movement of the blade out of the rotor plane 15. During performing the method, the rotor blade may be pitched in a stop position or a feathered position being characterized by a pitch angle for example of substantially 90°. For example, in this situation at rotor stand still, a cord line of the rotor blade 5 lies in the drawing plane of Fig. 1. Upon rotation of the rotor, the cord plane remains perpendicular to the rotor plane 15 and intersects the rotation axis 6.

In further embodiments the rotor blade 5 may be pitched to be in a normal power-producing operation or configuration, in order to characterize possible vibrations which can occur during normal power production operation.

The arrangement 2 comprises an input port 16 for receiving a signal 17 indicating a characteristic in particular including magnitude and/or phase and/or frequency of the vibration 14. In the illustrated embodiment, the wind turbine 5 comprises a strain gauge sensor 18 in order to measure a deformation of the rotor blade, this deformation being represented by the feedback signal 17 for example. In other embodiments, there may be installed an accelerometer 19 at the hub or at any other position of a not indicated nacelle or a drive train or the generator, the hub and potentially other components of the wind turbine. The sensor 18 may also be configured as a load sensor. The sensor 18 may be installed at any position of the rotor blade, for example also at a position closer to a root section of the rotor blade or to the tip section of the rotor blade.

In other embodiments, the arrangement 2 may also at the input port 16 receive a desired characteristic 29 of the vibration. The torque reference 21 may then be derived by the vibration exciting module 22 may then also be based on the desired characteristic 29 of the vibration. The exciting module 22 in an open-loop generate the torque reference based on e.g. user input.

The arrangement 2 further comprises a processor 20 (which may comprise one or more components or modules) adapted to determine a torque reference 21 which is suitable for exciting the vibration. For this purpose, the arrangement 20 comprises an active vortex-induced vibration exciting module 22 which derives the exciter (vibration enhancing) torque reference 21, also denoted as Tref, e.g. based on user input 29.

Thus, the monitoring module 30, receives the actual characteristic 17 of the vibration, in particular a magnitude of the vibration in a predetermined frequency range.

The monitoring module 30 may switch off (e.g. by switch off flag 31 supplied to module 22) generating the exciting torque, e.g. if a magnitude of the vibration is greater than a threshold for protecting at least one wind turbine component.

The monitoring module 30 may record the actual characteristic of the vibration 14 after switching off the exciting torque and may analyse the actual characteristic 17 of the vibration over a time range and/or determine decay characteristic of the vibration after switching off an exciting torque.

The arrangement 20 further comprises an output port 23 for control of the generator 3 based on the torque reference 21. As can be appreciated from the Fig. 1, The wind turbine 1 is configured to implement an inner loop 25. The inner loop 25 includes to monitor actual currents 26, for example including currents Ia,b,c, i.e., three-phase actual currents of stator windings of the generator 3. Furthermore, the actual currents 26 are provided to a current controller 26 (included in arrangement 2) which also receives or derives internally a current reference based on the torque reference 21. The current controller 26 is then adapted to derive an operational parameter reference 27, in particular a voltage reference V*a,b,c based on the input signals, in particular at least including the actual currents 26 and the torque reference 21.

The operational parameter reference 27 is then supplied to the generator-side converter 8. The generator-side converter 8 then controls not in detail illustrated controllable switches based on the operational parameter reference 27 and controls the generator 3, in order to generate a torque in accordance to the torque reference 21.

Thus, the operational parameter reference 27 is derived based on the torque reference 21. The controllable switches of the generator-side converter 8 are then operated based on the operational parameter reference 27.

Optionally, the wind turbine mechanical brake may be applied while the active vibration exciting is running, which may be mostly advantageous if the rotor is locked.

In the inner loop 25 (sensorless generator control), the current is controlled in a closed loop, requiring measurements of phase currents (Ia,b,c) and estimation of rotor position (for example sensorless) by means of a high frequency signal injection (HFI) observer. Current references (Idq* for conventional vector control) may be calculated from the reference torque Tref based on a model of the generator 3. The generator control may be well suited for zero and very low speed.

The exciting module 22may produce a torque reference 21 to increase or maximise the chosen vibration feedback signal 17 (for example blade moments and/or nacelle acceleration).

The exciting module 22 may according to optional or particular embodiments be implemented in order to derive a torque reference 21 in accordance to user inputs (e.g. signal 29), while monitoring and protecting from excessive vibration.

A simple implementation of the arrangement 2 may include:
a signal injection block (e.g. block 22), allowing the user to define amplitude and frequency of a sinusoidal torque reference, or alternative signals like square waves, etc;
a vibration monitoring block (e.g. block 30), monitoring quantities of interest with adequate signal processing algorithms;
a protection block (e.g. included in block 30), ensuring that the torque excitation is stopped when pre-determined vibration limits are exceeded.

When the blades are pitched to the stop position, the torque signal immediately provokes a blade motion in the flapwise direction. Because of the coupling between flapwise and edgewise motions due to the structural design of the blades, a significant amount of energy brought by the generator torque is also transferred to the edgewise direction. The torque level is adjusted in order to feed enough power to balance the aerodynamic power injected to the structure and consequently excite the vibrations.

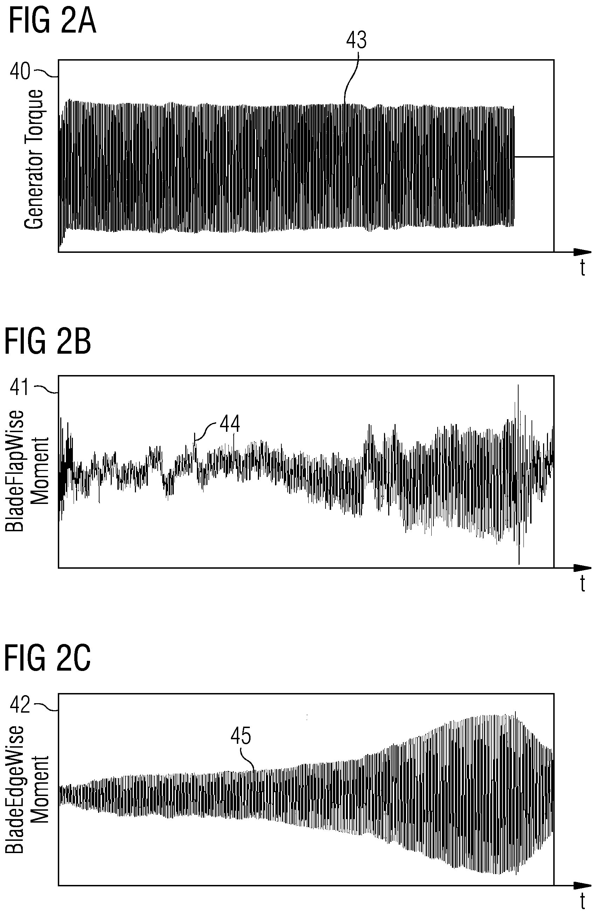

**Figs. 2A****,B,C** illustrate graphs with abscissas indicating the time and ordinate 40 indicating generator torque, ordinate 41 indicating blade flatwise moment and ordinate 42 indicating blade edgewise moment. In Fig. 2A, the curve 43 thus indicates the torque reference (for example torque reference 21 in Fig. 1) based on which the generator 3 is operated. The curve 44 in Fig. 2B indicates the blade flapwise moment which increases over time. The curve 45 in Fig. 2C illustrates the blade edgewise moment which also increases with time. Controlling the generator using the torque reference 43 illustrated in Fig. 2A causes excitation of blade flatwise vibrations as well as blade edgewise vibrations.

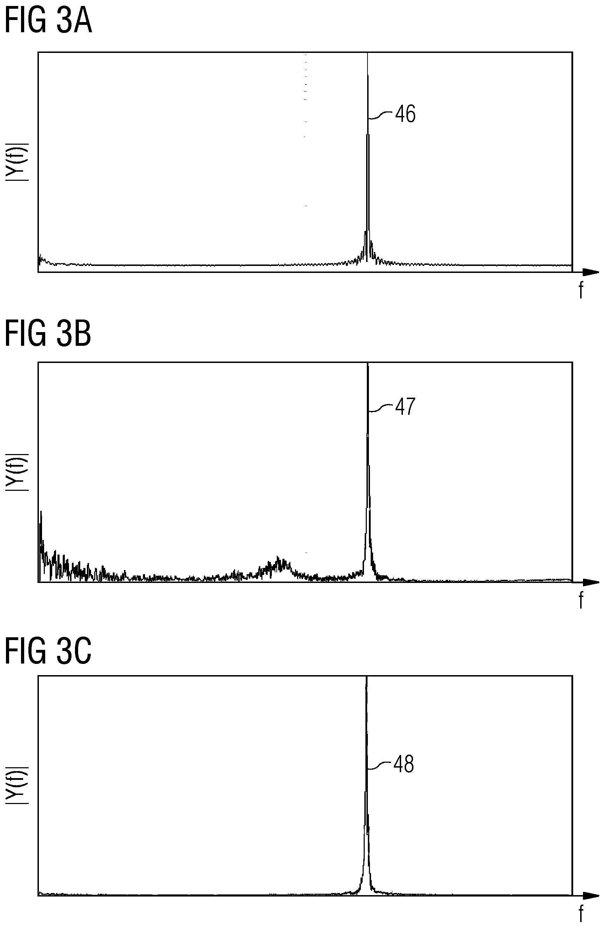

The **Figs. 3A****,B,C** represent Fourier transformations 46, 47, 48 of the signals 43, 44, 45, respectively, of the Figs. 2A,B,C. It is visible from the Figs. 3A,B,C that the torque reference 41 has substantially the same frequency as the frequency components of the flatwise vibration and edgewise vibration.

Thus, embodiments of the present invention may also excite intended or particular vibrations of rotor blades. Conversely, those experimental results also demonstrate that exciting of particular vibration modes of rotor blades is possible. A wind turbine was equipped with an unbalanced rotor having the exciting method applied for obtaining the results illustrated in Figs. 2 and 3. The test was conducted by injecting a torque reference 43 at the frequency of interest to replicate the vortex-induced vibration signatures. Tests showed the capability of a torque signal to interact with rotor vibration modes, indicating that active exciting is feasible.

Embodiments of the present invention provide a method of exciting one or more vibrations of one or more wind turbine components using a generator torque. Therein, desired turbine mode is excited and simulated via a generator torque.

Embodiments of the present invention enable to identify or get at prototype tests all risky conditions by the controlled excitation of one or more vibrations. Furthermore, embodiments provide precise risky condition data to optimize the conditions to avoid a potential design of mitigation actions.

Furthermore, characterization of structural damping from the prototype tests is more precise on the modelling of the risky aeroelastic areas. Furthermore, detection of vibrational characteristics or properties of one or more wind turbine components may allow to re-design or retrofit one or more components in order to mitigate aeroelastic instabilities. The method of excitation of wind turbine modes may be performed in a fast manner not requiring a large time range when it is waited for excitation during environmental conditions. Furthermore, a low-cost software-based solution may be provided if existing sensors can be used as feedback for the turbine modes such as VIV.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of exciting a vibration (14, 27, 28) of a wind turbine (1) having a wind turbine generator (3) including a rotor, in particular during an operation mode different from a power production mode, the method comprising, in particular in a repeated manner:
monitoring an actual characteristic (17), in particular including magnitude and/or phase and/or frequency, of the vibration (14, 27, 28);
determining a torque reference (21, Tref) based on a desired characteristic (29) of the vibration, the torque reference being suitable for exciting the vibration;
generating a torque by the generator (3) according to the torque reference (21, Tref) for exciting the vibration (14, 27, 28).

2. Method according to the preceding claim, further comprising:
evaluating the actual characteristic, in particular in dependence of the torque reference, in particular including frequency analysis, in order to map critical conditions.

3. Method according to any one of the preceding claims, wherein the generator is electrically connected to a generator-side converter (8), in particular AC/DC converter, including plural controllable switches, for controlling the generator (3), the method comprising:
deriving an operational parameter reference (27, V*abc), in particular voltage reference, which is based on the torque reference (Tref) and in particular an actual torque indicating feedback (26, Iabc);
receiving, by the generator-side converter (8), the operational parameter reference (27, V*abc), in particular voltage reference;
operating, by the generator-side converter (8), the controllable switches based on the operational parameter reference (27, V*abc).

4. Method according to any one of the preceding claims, further comprising, in particular as an inner loop (25):
monitoring actual currents (Iabc) of generator windings of the generator (3);
determining a current reference, in particular in a d-q frame, based on the torque reference (21, Tref) and in particular a rotor position;
supplying the monitored actual currents (Iabc), in particular converted to the d-q frame, and the current reference to a current controller (26), in particular in including a proportional and/or integral and/or differential term;
deriving, by the current controller (26), an operational parameter reference (27, V*abc), in particular in an abc-frame, in particular voltage reference;
supplying the operational parameter reference (27, V*abc) to the generator-side converter (8).

5. Method according to any one of the preceding claims, wherein the rotor position is derived sensorless by a high frequency signal injection method.

6. Method according to any one of the preceding claims, further comprising at least one of:
receiving, by a monitoring module (30), the actual characteristic (17) of the vibration (14), in particular a magnitude of the vibration in a predetermined frequency range;
switching off generating the exciting torque;
recording the actual characteristic (17) of the vibration (14), in particular a magnitude of the vibration in a predetermined frequency range over a time range after switching off the exciting torque;
analysing the actual characteristic (17) of the vibration (14), in particular a magnitude of the vibration in a predetermined frequency range over a time range;
determining decay characteristic of the vibration after switching off an exciting torque;
switching off the exciting torque, if a magnitude of the vibration is greater than a threshold for protecting at least one wind turbine component.

7. Method according to any one of the preceding claims, wherein the actual characteristic (17) of the vibration is monitored using measurement data from at least one blade strain gauge sensor (18) and/or load sensor and/or accelerometer (19) installed at the blade (5) and/or at the generator (3) and/or drive train and/or at a nacelle.

8. Method according to any one of the preceding claims, wherein the operation mode includes that the rotor (3a) stands still and/or that the rotor is idling and/or locked and/or a brake is applied to the rotor and/or that a rotational speed of the rotor (3a) is less than 0.1 rpm or is in nominal operation range for power production.

9. Method according to any one of the preceding claims, the vibration including at least one of:
an aeroelastic vibration of one or more components of the wind turbine;
a vortex-induced vibration (VIV) of a wind turbine blade being coupled to a rotor of the generator;
a stall-induced vibration (SIV) of a wind turbine blade being coupled to a rotor of the generator;
a vibration of at least portion of a drive train of the wind turbine;
a vibration of at least a portion of a rotor blade of the wind turbine;
an edgewise vibration (14) of at least a portion of a rotor blade, in particular out of or orthogonal to a rotor plane (15),
an flapwise vibration (14) of at least a portion of a rotor blade, in particular within or parallel to a rotor plane (15),
a vibration of at least portion of a rotor of the wind turbine;

10. Method according to any one of the preceding claims, wherein the generator-side converter (8) is connected to a DC-link (9) which is connected to a grid-side converter (11), the method comprising:
stopping the grid side converter (11) or keeping the grid side converter (11) turned off.

11. Method according to any one of the preceding claims, wherein at least one of the following is satisfied:
the blade (5) is pitched to substantially 90° or a feather position or a stop position or an idling position;
the desired characteristics of the vibration (14) resembles that of a vortex induced vibration;
the desired characteristics of the vibration (14) includes one or more edgewise rotor vibration modes, in particular having frequency between 0.1 Hz and 5 Hz.

12. Method according to any one of the preceding claims, wherein the generator (3) is or comprises a permanent magnet synchronous generator, in particular having an outer rotor (3a) .

13. Arrangement (2) for exciting a vibration (14, 27, 28) of a wind turbine (1) having a generator (3) including a rotor (3a), in particular during an operation mode different from a power production mode, the arrangement comprising:
an input port (16) for receiving a signal (17) indicating an actual characteristic, in particular including magnitude and/or phase and/or frequency, of the vibration (14, 27, 28);
a processor (20, 22) adapted to determine a torque reference (21, Tref) at least based on a desired characteristic (29) of the vibration, the torque reference being suitable for exciting the vibration;
an output port (23) for controlling the generator (3) based on the torque reference (21, Tref).

14. Arrangement according to the preceding claim, which is adapted to carry out or control a method according to any one of claims 1 to 12.

15. Wind turbine (1), including:
an arrangement (2) according to any one of the claims 13 or 14;
a generator (3) for generating a torque according to the torque reference;
at least a generator-side converter (8) electrically connected to the generator, the arrangement being connected to control the generator-side converter;
in particular at least one rotor blade (5) coupled to the rotor (3a) of the generator (3).
